(19) Europäisches Patentamt
European Patent Office
Office européen des brevets

(11) **EP 1 347 165 B1**

(12) **EUROPÄISCHE PATENTSCHRIFT**

(45) Veröffentlichungstag und Bekanntmachung des Hinweises auf die Patenterteilung:
**04.06.2008 Patentblatt 2008/23**

(51) Int Cl.:
*F02D 41/38* (2006.01)   *F02D 41/40* (2006.01)
*F02D 41/22* (2006.01)

(21) Anmeldenummer: **02027055.9**

(22) Anmeldetag: **03.12.2002**

(54) **Verfahren und Vorrichtung zur Steuerung der Kraftstoffzumessung in eine Brennkraftmaschine**

Method and device for controlling fuel metering in an internal combustion engine

Procédé et dispositif de commande du dosage de carburant pour un moteur à combustion interne

(84) Benannte Vertragsstaaten:
**DE GB IT SE**

(30) Priorität: **21.03.2002 DE 10212508**

(43) Veröffentlichungstag der Anmeldung:
**24.09.2003 Patentblatt 2003/39**

(73) Patentinhaber: **ROBERT BOSCH GMBH**
**70442 Stuttgart (DE)**

(72) Erfinder:
• **Coates, Derek**
  **76676 Graben-Neudorf (DE)**
• **Empacher, Lars**
  **70184 Stuttgart (DE)**

(56) Entgegenhaltungen:
EP-A- 1 022 452     DE-A- 19 520 037
DE-A- 19 712 143    DE-A- 19 726 100
DE-A- 19 857 971

## Beschreibung

Stand der Technik

Die Erfindung betrifft ein Verfahren und eine Vorrichtung zur Steuerung der Kraftstoffzumessung in eine Brennkraftmaschine.

Aus der EP 1 022 542 A1 ist ein so genanntes Common-Rail-System bekannt, bei dem der Druck in einem Rail von einer Hochdruckpumpe erzeugt wird. Mittels Injektoren wird dann aus diesem Rail Kraftstoff den einzelnen Zylindern der Brennkraftmaschine zugemessen. In dieser Schrift ist beschrieben, wie ausgehend von dem Ansteuersignal für die Hochdruckpumpe der Kraftstoffdruck im Rail berechnet wird.

Bei bekannten Pumpe-Düse-Einheiten ist lediglich ein Stellelement, insbesondere ein Magnetventil oder ein Piezoaktor vorgesehen, der bestromt oder entstromt sein kann. Dies entspricht den zwei Zuständen Ruhestellung und Einspritzphase. Neuere Pumpe-Düse-Systeme besitzen einen dritten zusätzlichen Zustand, bei dem Druck in der Pumpe aufgebaut und damit variabel einstellbar ist. D.h. der Druck mit dem die Einspritzung beginnt, ist variabel einstellbar. Dadurch ergibt sich neben Einspritzbeginn und Einspritzdauer noch ein weiterer freier kontinuierlicher Parameter, welcher großen Einfluss auf die Einspritzmenge besitzt.

Solche Kraftstoffeinspritzeinheiten beinhalten ein erstes Stellelement, das mit einem ersten Ansteuersignal beaufschlagt wird, das den Beginn und das Ende der Kraftstoffzumessung steuert, und ein zweites Stellelement, das mit einem zweiten Ansteuersignal beaufschlagt wird, das den Druck, der für die Kraftstoffzumessung zur Verfügung steht, steuert. Eine solche Kraftstoffeinspritzeinheit ist beispielsweise aus der EP 0 840 003 bekannt.

Erfindungsgemäß ist vorgesehen, dass mittels eines halbempirischen Modells der zeitliche Verlauf des Einspritzdrucks und damit die Einspritzmenge ausgehend von dem ersten und dem zweiten Ansteuersignal unter Verwendung von Konstanten und Abhängigkeiten der Größen ermittelt wird. Ein Erfindungsgemäßen Verfahren und eine entsprechende Vorrichtung werden durch die unabängigen Ansprüche 1 und 6 definiert. Dabei wird ausgehend von wenigstens einem ersten Ansteuersignal und einem zweiten Ansteuersignal den Verlauf des Drucks zu ermittelt. Dies ist insbesondere bei einer Kraftstoffzueinspritzeinheit vorteilhaft, die den Kraftstoff abhängig von einem ersten und einem zweiten Ansteuersignal einer Brennkraftmaschine zumisst, wobei das erste Ansteuersignal den Beginn und das Ende der Kraftstoffzumessung und das zweite Ansteuersignal den Druckaufbau steuert.

Ausgehend von dem ersten und zweiten Ansteuersignal sind Größen vorgebbar, die den Beginn des Druckaufbaus, den Beginn der Kraftstoffzumessung und/oder das Ende der Kraftstoffzumessung charakterisieren. Diese Größen charakterisieren wesentlich den zeitlichen Verlauf des Druck des Kraftstoffs.

Neben den oben genannten Größen bestimmt die Drehzahl wesentlich den Verlauf des Drucks. Dies ist insbesondere bei so genannten Pumpe-Düse-Systemen der Fall. Daher wird zusätzlich die Drehzahl zur Bestimmung des Verlaufs des Drucks verwendet.

Ausgehend von dem Verlauf des Drucks wird durch Integration in einfacher Weise die eingespritzte Kraftstoffmenge bestimmt.

Besonders vorteilhaft ist es, dass die berechnete Kraftstoffmenge, und/oder der berechnete Druck mit vorgegebenen Werten verglichen wird, und dass ausgehend von dem Vergleich auf Fehler erkannt wird. Dadurch ergibt sich eine einfache und effektive Überwachung der Einspritzeinrichtung.

Besonders vorteilhaft und einfach ist es, wenn die berechnete Kraftstoffmenge mit einer gewünschten Kraftstoffmenge verglichen wird, und dass ausgehend von dem Vergleich auf Fehler erkannt wird

Bei der Verwendung des Modells als Druckschätzer werden der Druck und die eingespritzte Kraftstoffmenge ständig im Steuergerät berechnet. Dieses so gewonnene Drucksignal bzw. das Kraftstoffmengensignal kann dann zur Fehlerüberwachung und/oder zur Steuerung der Einspritzung verwendet werden. Insbesondere kann vorgesehen sein, dass auf Fehler erkannt wird, wenn der Druck einen Maximaldruck überschreitet bzw. wenn die Einspritzmenge eine Maximalmenge überschreitet.

Des weiteren kann das Modell als Applikationshilfe eingesetzt werden. Die Einspritzmenge ist bei diesen Systemen zusätzlich zur Einspritzdauer außerdem wesentlich vom Nadelöffnungsdruck abhängig. Der Applikateur hat dadurch bei gegebener Drehzahl und Kraftstofftemperatur zwei Parameter zum Einstellen der gewünschten Menge zu vereinbaren.

Die dem Modell zugrundeliegenden Formeln sind invertierbar. Dies erlaubt dem Applikateur den Einspritzverlauf, d.h.

Menge, Einspritzbeginn und Nadelöffnungsdruck vorzugeben. Daraus wird dann die notwendige Einspritzsequenz berechnet.

Von besonderer Bedeutung sind weiterhin die Realisierungen in Form eines Computerprogramms mit Programmcode-Mitteln und in Form eines Computerprogrammprodukts mit Programmcode-Mitteln. Das erfindungsgemäße Computerprogramm weist Programmcode-Mittel auf, um alle Schritte des erfindungsgemäßen Verfahrens durchzuführen, wenn das Programm auf einem Computer, insbesondere einem Steuergerät für eine Brennkraftmaschine eines Kraftfahrzeugs, ausgeführt wird. In diesem Fall wird also die Erfindung durch ein in dem Steuergerät abgespeichertes Programm realisiert, so dass dieses mit dem Programm versehene Steuergerät in gleicher Weise die Erfindung darstellt wie das Verfahren, zu dessen Ausführung das Programm geeignet ist. Das erfindungsgemäße Computerprogrammprodukt weist Programmcode-Mittel auf, die auf einem computerlesbaren Datenträger gespeichert sind, um das erfindungsgemäße Verfahren durchzuführen, wenn das Programmprodukt auf einem Computer, insbesondere einem Steuergerät für eine Brennkraftmaschine eines Kraftfahrzeugs ausgeführt wird. In diesem Fall wird also die Erfindung durch einen Datenträger realisiert, so dass das erfindungsgemäße Verfahren ausgeführt werden kann, wenn das Programmprodukt bzw. der Datenträger in ein Steuergerät für eine Brennkraftmaschine insbesondere eines Kraftfahrzeugs integriert wird. Als Datenträger bzw. als Computerprogrammprodukt kann insbesondere ein elektrisches Speichermedium zur Anwendung kommen, beispielsweise ein Read-Only-Memory (ROM), ein EPROM oder auch ein elektrischer Permanentspeicher wie beispielsweise eine CD-ROM oder DVD.

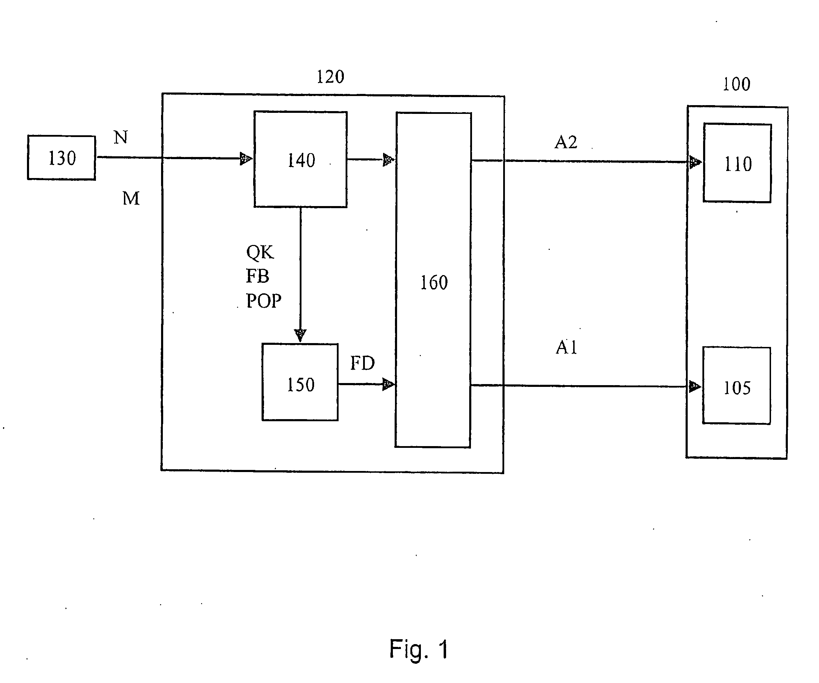

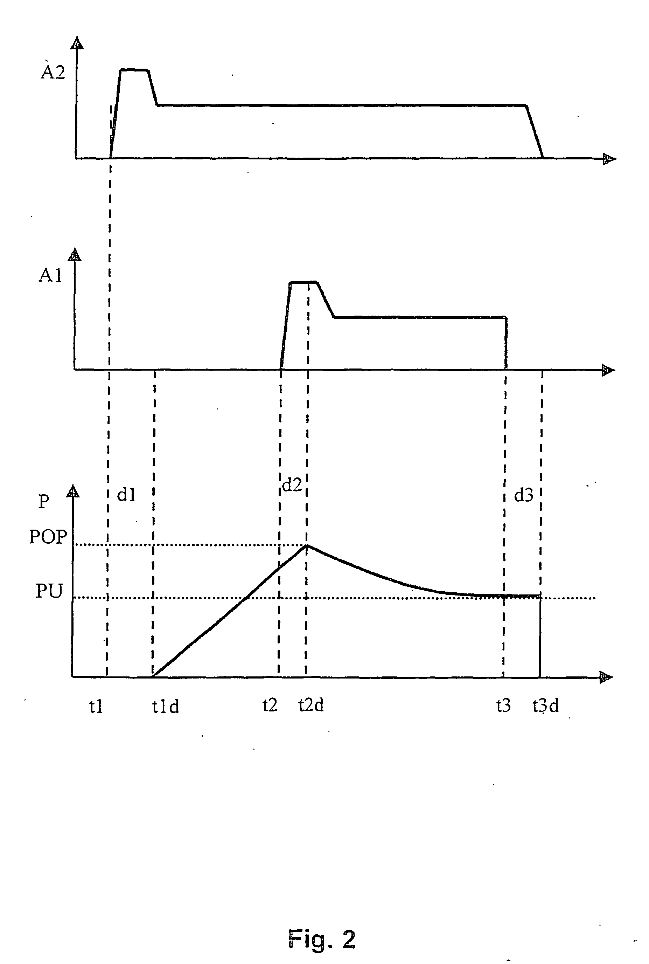

Die Erfindung wird nachstehend anhand der in der Zeichnung dargestellten Ausführungsformen erläutert. Es zeigen die Figur 1 ein Blockdiagramm der erfindungsgemäßen Vorgehensweise und die Figur 2 verschiedene über der Zeit aufgetragene Größen.

In Figur 1 ist die erfindungsgemäße Vorrichtung anhand eines Blockdiagrammes dargestellt. Eine Kraftstoffeinspritzeinheit ist mit 100 bezeichnet. Diese Kraftstoffeinspritzeinheit umfasst ein erstes Stellelement 105 sowie ein zweites Stellelement 110. Mittels des ersten Stellelements kann der Einspritzbeginn, das Einspritzende und damit die Einspritzmenge beeinflusst werden. Mittels des zweiten Stellelements kann der Beginn und das Ende des Druckaufbaus beeinflusst werden. Der mechanische Aufbau einer solchen Kraftstoffeinspritzeinheit ist beispielsweise in der EP 0 840 003 beschrieben. Die dort beschriebene Kraftstoffeinspritzeinheit wird üblicherweise als Pumpe-Düse-Einheit bezeichnet.

Die Kraftstoffeinspritzeinheit wird von einem Steuergerät 120 mit Ansteuersignalen A1 für das erste Stellelement und mit Ansteuersignalen A2 für das zweite Stellelement beaufschlagt. Hierzu wertet das Steuergerät 120 Signale N verschiedener Sensoren 130 aus. Unter anderem wertet das Steuergerät das Signal N eines Drehzahlsensors bzw. das Signal M eines Pedalwertgebers und/oder eine Momentenanforderung.

Das Steuergerät 120 umfasst im wesentlichen eine Steuereinheit 140, ein Pumpenkennfeld 150 und eine Ansteuereinheit 160. Die Steuereinheit 140 beaufschlagt das Pumpenkennfeld 150 mit verschiedenen Signalen, wie beispielsweise einem Signal QK, das die gewünschte einzuspritzende Kraftstoffmenge charakterisiert, einem Signal FB, das den gewünschten Einspritzbeginn charakterisiert und einem Signal POP, das den Kraftstoffdruck beim Beginn der Kraftstoffeinspritzung kennzeichnet. Das Pumpenkennfeld 150 setzt diese Signale in ein Signal FD, das die Ansteuerdauer charakterisiert, um und übergibt diese an die Ansteuereinheit. Des weiteren beaufschlagt die Steuereinheit 140 die Ansteuereinheit 160 unmittelbar mit Signalen, die den Einspritzbeginn, den Beginn und das Ende des Druckaufbaus charakterisieren. Diese Signale werden von der Ansteuereinheit 160 in Ansteuersignale A1 und A2 zur Beaufschlagung des ersten und des zweiten Stellelements umgesetzt.

Vorzugsweise ist vorgesehen, dass ein Pumpenkennfeld 150 verwendet wird, dem als Eingangsgrößen ein Signal bezüglich des Spritzbeginns bzw. des Förderbeginns, ein Drehzahlsignal N, eine einzuspritzende Kraftstoffmenge charakterisierendes Signal QK, sowie ein den Druck POP, der zu Beginn der Einspritzung im Hochdruckbereich der Kraftstoffeinspritzeinheit herrscht, charakterisierendes Signal zugeführt werden. Als Ausgangsgröße stellt das Pumpenkennfeld die berechnete Förderdauer FD bereit. Dieses druckabhängige Pumpenkennfeld gilt dann bei allen Teileinspritzungen.

Der Druck POP, der zu Beginn der Einspritzung herrscht, kann intern im Steuergerät 120 aus anderen Größen gemäß dem im folgenden beschriebenen Verfahren modelliert werden.

Die Steuereinheit 140 gibt ausgehend von verschiedenen Betriebskenngrößen, die mit nicht dargestellten Sensoren erfasst werden, verschiedene Größen vor. Dies sind unter anderem die gewünschte einzuspritzende Kraftstoffmenge QK, der Druck POP zu Beginn der Kraftstoffeinspritzung, der Förderbeginn FB, der Beginn und das Ende des Druckaufbaus. Diese Größen werden bei mehreren Teileinspritzungen jeweils für alle Teileinspritzungen vorgegeben. Anstelle des Spritzbeginns kann auch eine äquivalente Größe wie beispielsweise der Förderbeginn vorgegeben werden. Diese Größen werden von der Ansteuereinheit 160 in Ansteuersignale A1 und A2 zur Beaufschlagung des ersten Stellelements 105 und des zweiten Stellelements 110 umgesetzt.

Bei der Modellierung des Drucks und damit der Kraftstoffmenge werden im wesentlichen drei zeitliche Phasen unterschieden. Dies sind zum einen die Ruhestellung, d.h. kein Druckaufbau, zum anderen der Druckaufbau und zum dritten die Einspritzung.

In Figur 2 sind die verschiedenen Phasen über der Zeit t und die dabei vorliegenden Ansteuersignale A1 und A2 für die Stellelemente sowie der Druck P aufgetragen. Zum Zeitpunkt t1 beginnt die Ansteuerung des zweiten Stellelements. Zum Zeitpunkt t1d, der im wesentlichen um die Schaltzeit d1 des zweiten Stellelements nach dem Zeitpunkt t1 liegt, nimmt das zweite Stellelement eine Position ein, bei dem ein Druckaufbau möglich ist. Ab dem Zeitpunkt t1d beginnt die Druckaufbauphase.

Zum Zeitpunkt t2 beginnt die Ansteuerung des ersten Stellelements, zum Zeitpunkt t2d, der im wesentlichen um die Schaltzeit d2 des ersten Stellelements nach dem Zeitpunkt t2 liegt, endet die Druckaufbauphase und beginnt die Einspritzphase. Zum Zeitpunkt t3 endet die Ansteuerung des ersten Stellelements und zum Zeitpunkt t3d, der im wesentlichen um die Schaltzeit d3 des ersten Stellelements nach dem Zeitpunkt t3 liegt, endet die Kraftstoffzumessung.

Die Druckaufbauphase beginnt zum Zeitpunkt t1d und endet zum Zeitpunkt t2d. Während der Druckaufbauphase steigt der Druck in der Pumpe abhängig vom Kolbenhub und damit dem überstrichenen Winkel der Nockenwelle unabhängig von der Drehzahl. Dabei gilt für den zeitlichen Verlauf des Drucks P gemäß der folgenden Formel:

$$P(t) = C_1 * \int_{w(t1d)}^{w(t2d)} C1000(w) * dw$$

Hierbei handelt es sich bei der Größe C1 um Konstante Größen. Die Größe C1000 beschreibt die Form des Nockenprofils, d.h. die Form des Nockens, der die Pumpe antreibt. Bei der Größe w(t) handelt es sich um die Winkelstellung der Nockenwelle.

Der Übergang in die Einspritzphase erfolgt innerhalb einer vom Pumpendruck abhängigen Zeit d2 nach dem Zeitpunkt t2. Die Zeit d2 ist unabhängig von der Drehzahl. Dabei gilt die Beziehung:

$$d2 = F(POP)$$

Dabei ist F eine bekannte Funktion und POP der Kraftstoffdruck zum Zeitpunkt t2d das heißt zum Beginn der Einspritzung.

Die Einspritzphase endet zum Zeitpunkt t3d. Während der Einspritzphase wird durch den Kolben drehzahlabhängig Kraftstoff nachgepumpt, während durch die Düse druckabhängig Kraftstoff eingespritzt wird. Der Druckverlauf P folgt während der Einspritzphase hinreichend genau der folgenden Exponentialfunktion.

$$P(t) = PU + (POP - PU) * \exp\frac{-t}{\tau}$$

Es stellt sich dabei am Ende einer (unendlich) langen Einspritzung der Pumpendruck PU ein, der nur von der Drehzahl abhängig ist, nicht aber vom Druck POP zu Beginn der Einspritzung. Der Druck kann demnach während der Einspritzung ansteigen oder abfallen. Das Ende der Einspritzphase zum Zeitpunkt t3d erfolgt um eine konstante Zeit d3 nach dem Entstromen t3 des ersten Stellelemnts.

Erfindungsgemäß werden ausgehend von dem ersten und zweiten Ansteuersignal A1 und A2 Größen vorgegeben, die den Beginn t1d des Druckaufbaus, den Beginn der Kraftstoffzumessung t2d und/oder das Ende der Kraftstoffzumessung t3d charakterisieren. Unter Verwendung der Drehzahl wird der Druck PU vorgegeben und zur Bestimmung des Verlaufs des Drucks P verwendet.

Ausgehend von diesen Größen und den angegebenen Formeln wird erfindungsgemäß der zeitliche Verlauf des Druckes P und durch Integration des zeitlichen Verlaufes vom Zeitpunkt t2d bis zum Zeitpunkt t3d die eingespritzte Kraftstoffmenge bestimmt. Hierzu wird davon ausgegangen, das die eingespritzte Kraftstoffmenge QK in guter Näherung dem Gesetz der turbulenten Strömung gehorcht. Daher wird die folgende Gleichung verwendet:

$$QK \doteq C * \int_{t2d}^{t3d} \sqrt{P(t)} dt$$

Die beschriebene Vorgehensweise zur Bestimmung des Druckverlaufs ist unterschiedlich einsetzbar. So kann die Vorgehensweise als Applikationshilfe und/oder als Druckschätzer eingesetzt werden.

Bei der Verwendung des Modells als Druckschätzer werden der Druck und die eingespritzte Kraftstoffmenge ständig im Steuergerät berechnet. Dieses so gewonnene Drucksignal und/oder das Kraftstoffmengensignal wird dann zur Fehlerüberwachung und/oder zur Steuerung der Einspritzung verwendet. Vorzugsweise wird der Druck POP bei Beginn der Einspritzung zur Bestimmung der Ansteuerdauer mittels des Pumpenkennfeldes verwendet. Das heißt das Ansteuersignal für das erste Stellelement 105, insbesondere die Ansteuerdauer, wird aus dem Pumpenkennfeld ausgehend von der Drehzahl N, der einzuspritzenden Kraftstoffmenge QK und dem Druck POP beim Beginn der Einspritzung ausgelesen.

Insbesondere kann vorgesehen sein, dass auf Fehler erkannt wird, wenn der Druck einen Maximaldruck überschreitet bzw. wenn die Einspritzmenge eine Maximalmenge überschreitet. Vorzugsweise wird auf Fehler erkannt, wenn die mit dem Modell berechnete Menge wesentlich, das heißt um mehr als ein Schwellenwert, von der gewünschten Kraftstoffmenge, die insbesondere abhängig vom Fahrerwunsch vorgegeben wird, abweicht. Besonders vorteilhaft ist es, wenn einzelne Größen des Modells, wie beispielsweise der Kraftstoffdruck POP beim Beginn der Einspritzung ermittelt und zur Bestimmung der Ansteuersignale verwendet werden.

Erfindungsgemäß wird die berechnete Kraftstoffmenge, und/oder der berechnete Druck mit vorgegebenen Werten verglichen, ausgehend von dem Vergleich wird auf Fehler erkannt. Insbesondere wird die berechnete Kraftstoffmenge mit einer gewünschten Kraftstoffmenge verglichen.

Des weiteren kann das Modell als Applikationshilfe eingesetzt werden. Die Einspritzmenge ist bei diesen Systemen zusätzlich zur Einspritzdauer außerdem wesentlich vom Druck zu Beginn der Einspritzung abhängig. Der Applikateuer hat dadurch bei gegebener Drehzahl und Kraftstofftemperatur zwei Parameter zum Einstellen der gewünschten Menge zu vereinbaren.

Vorzugsweise werden im Rahmen der Applikation an Mustern der Einspritsysteme nur wenige Druckverläufe und Einspritzmengen gemessen. Aus diesen wenigen Messwerten werden die Konstanten Größen und die'Abhängigkeiten (Funktionen) der einzelnen Größen ermittelt. Mit diesen so ermittelten Größen, werden dann in den übrigen und/oder allen Betriebspunkten ausgehend von den Ansteuersignalen die Druckverläufe und/oder die Einspritzmengen berechnet. Der Aufwand im Rahmen der Applikation wird deutlich verringert. Statt aller Betriebspunkte müssen nur wenige Betriebspunkte ca. 10 bis 50 vermessen werden.

Die dem Modell zugrundeliegenden Formeln sind invertierbar. Dies erlaubt dem Applikateur den Einspritzverlauf, d.h. Menge, Einspritzbeginn und Kraftstoffdruck zu Beginn der Einspritzung vorzugeben. Daraus wird dann die notwendige Einspritzsequenz berechnet.

Erfindungsgemäß wird bei der Applikation die Kraftstoffmenge in verschiedenen Betriebspunkten gemessen und ausgehend von den Messwerten die Konstanten und die Abhängigkeiten ermittelt. Ausgehend von den ermittelten Konstanten und Abhängigkeiten werden die Kraftstoffmengenwerte für die übrigen Betriebspunkte und/oder für alle Betriebspunkte ermittelt.

**Patentansprüche**

1. Verfahren zur Ermittlung eines Kraftstoffdrucks und einer eingespritzten Kraftstoffmenge, wobei eine Pumpe-Düse-Einheit einer Brennkraftmaschine Kraftstoff abhängig von einem ersten und einem zweiten Ansteuersignal zumisst, wobei das erste Ansteuersignal den Beginn und das Ende der Kraftstoffzumessung und das zweite Ansteuersignal den Druckaufbau steuert, **dadurch gekennzeichnet, dass** ausgehend von wenigstens dem ersten Ansteuersignal und dem zweiten Ansteuersignal und einer Drehzahl der Verlauf des Drucks ermittelt wird, wobei ausgehend von dem ersten und zweiten Ansteuersignal Größen vorgebbar sind, die den Beginn des Druckaufbaus, den Beginn der Kraftstoffzumessung und/oder das Ende der Kraftstoffzumessung charakterisieren und dass ausgehend von dem Druckverlauf die eingespritzte Kraftstoffmenge bestimmt wird.

2. Verfahren nach einem der vorherigen Ansprüche, **dadurch gekennzeichnet, dass** bei der Applikation die Kraftstoffmenge in verschiedenen Betriebspunkten gemessen und ausgehend von den Messwerten Konstanten und Abhängigkeiten, die zur Bestimmung des Verlaufs des Drucks benötigt werden, ermittelt werden.

3. Verfahren nach Anspruch 2, **dadurch gekennzeichnet, dass** ausgehend von den ermitteltten Konstanten und Abhängigkeiten die Kraftstoffmengenwerte für die übrigen Betriebspunkte ermittelt werden.

4. Verfahren nach einem der vorherigen Ansprüche, **dadurch gekennzeichnet, dass** die berechnete Kraftstoffmenge, und/oder der berechnete Druck mit vorgegebenen Werten verglichen wird, dass ausgehend von dem Vergleich auf Fehler erkannt wird.

5. Verfahren nach Anspruch 4, **dadurch gekennzeichnet, dass** die berechnete Kraftstoffmenge mit einer gewünschten Kraftstoffmenge verglichen wird, und dass ausgehend von dem Vergleich auf Fehler erkannt wird

6. Vorrichtung zur Ermittlung eines Kraftstoffdrucks und einer eingespritzten Kraftstoffmenge, wobei eine Pumpe-Düse-Einheit den Kraftstoff abhängig von einem ersten und einem zweiten Ansteuersignal einer Brennkraftmaschine zumisst, wobei das erste Ansteuersignal den Beginn und das Ende der Kraftstoffzumessung und das zweite Ansteuersignal den Druckaufbau steuert, **gekennzeichnet durch** Mittel, die ausgehend von wenigstens dem ersten Ansteuersignal, dem zweiten Ansteuersignal und einer Drehzahl den Verlauf des Drucks ermitteln, und die ausgehend von dem ersten und zweiten Ansteuersignal Größen vorgeben, die den Beginn des Druckaufbaus, den Beginn der Kraftstoffzumessung und/ oder das Ende der Kraftstoffzumessung charakterisieren,und die ausgehend von dem Druckverlauf die eingespritzte Kraftstoffmenge bestimmen.

7. Computerprogramm mit Programmcode-Mitteln, um alle Schritte von jedem beliebigen der Ansprüche 1 bis 5 durchzuführen, wenn das Programm auf einem Computer, insbesondere einem Steuergerät für eine Brennkraftmaschine, ausgeführt wird.

8. Computerprogrammprodukt mit Programmcode-Mitteln, die auf einem computerlesbaren Datenträger gespeichert sind, um das Verfahren nach jedem beliebigen der Ansprüche 1 bis 8 durchzuführen, wenn das Programmprodukt auf einem Computer, insbesondere einem Steuergerät für eine Brennkraftmaschine, ausgeführt wird.

9. Digitales Speichermedium, insbesondere Diskette, mit elektronisch auslesbaren Steuersignalen, auf dem ein Computerprogramm gemäß Anspruch 7 gespeichert ist.

## Claims

1. Method for identifying a fuel pressure and an injected fuel quantity, wherein a pump-nozzle unit of an internal combustion engine meters fuel as a function of a first and a second actuation signal, wherein the first actuation signal controls the start and the end of the metering of fuel and the second actuation signal controls the increase in pressure, **characterized in that** the profile of the pressure is identified on the basis of at least the first actuation signal and the second actuation signal and a rotational speed, wherein variables which characterize the start of the increase in pressure, the start of the metering of fuel and/or the end of the metering of fuel can be predefined on the basis of the first and second actuation signal, and **in that** the injected fuel quantity is determined on the basis of the pressure profile.

2. Method according to one of the preceding claims, **characterized in that** in the application the fuel quantity is measured at different operating points, and constants and dependencies which are required to determine the profile of the pressure are identified on the basis of the measured values.

3. Method according to Claim 2, **characterized in that** the fuel quantity values for the remaining operating points are identified on the basis of the identified constants and dependencies.

4. Method according to one of the preceding claims, **characterized in that** the calculated fuel quantity and/or the calculated pressure are compared with predefined values, and **in that** faults are detected on the basis of the comparison.

5. Method according to Claim 4, **characterized in that** the calculated fuel quantity is compared with a desired fuel quantity, and **in that** faults are detected on the basis of the comparison.

6. Device for identifying a fuel pressure and an injected fuel quantity, wherein a pump-nozzle unit meters the fuel as a function of a first and a second actuation signal of an internal combustion engine, wherein the first actuation signal controls the start and the end of the metering of fuel, and the second actuation signal controls the increase in pressure, **characterized by** means which identify the profile of the pressure on the basis of at least the first actuation signal, the second actuation signal and a rotational speed, and which predefine, on the basis of the first and second actuation signal, variables which characterize the start of the increase in pressure, the start of the metering of fuel and/or the end of the metering of fuel, and which determine the injected fuel quantity on the basis of the pressure profile.

7. Computer program having program code means in order to carry out all the steps of any of Claims 1 to 5 if the program is executed on a computer, in particular a control unit for an internal combustion engine.

8. Computer program product having program code means which are stored on a computer-readable data carrier in order to carry out the method according to any of Claims 1 to 5 if the program product is executed on a computer, in particular a control unit for an internal combustion engine.

9. Digital storage medium, in particular diskette, having electronically readable control signals on which a computer program according to Claim 7 is stored.

## Revendications

1. Procédé pour déterminer une pression de carburant et une quantité de carburant à injecter selon lequel, une unité pompe-injecteur d'un moteur à combustion interne dose du carburant en fonction d'un premier et d'un second signal de commande,
le premier signal de commande assurant la commande du début et de la fin du dosage de carburant et le second signal de commande assurant la commande de la montée en pression,
**caractérisé en ce que**
partant au moins du premier signal de commande et du second signal de commande ainsi que d'une vitesse de rotation, on détermine l'évolution de la pression,
partant du premier et du second signal de commande on prédéfinit des grandeurs qui caractérisent le début de la montée en pression, le début du dosage du carburant et/ou la fin du dosage du carburant et partant de l'évolution de la pression, on détermine la dose de carburant à injecter.

2. Procédé selon la revendication précédente,
**caractérisé en ce que**
dans l'application, on mesure la dose de carburant en différents points de fonctionnement et partant des valeurs de mesure, on détermine des constantes et des relations nécessaires pour déterminer l'évolution de la pression.

3. Procédé selon la revendication 2,
**caractérisé en ce que**
partant des constantes déterminées et des relations, on détermine les valeurs des doses de carburant pour les autres points de fonctionnement.

4. Procédé selon l'une des revendications précédentes,
**caractérisé en ce qu'**

on compare les doses de carburant calculées et/ou la pression calculée à des valeurs prédéfinies et partant de cette comparaison, on décèle des défauts.

5. Procédé selon la revendication 4,
**caractérisé en ce qu'**
on compare les doses de carburant calculées à une dose de carburant souhaitée et partant de la comparaison, on détecte les défauts.

6. Dispositif de détermination d'une pression de carburant et d'une quantité de carburant injectée selon lequel, une unité pompe-injecteur dose le carburant en fonction d'un premier et d'un second signal de commande d'un moteur à combustion interne, le premier signal de commande définissant le début et la fin du dosage du carburant et le second signal de commande assurant la commande de la montée en pression,
**caractérisé par**
des moyens qui, partant au moins du premier signal de commande, du second signal de commande et d'une vitesse de rotation, déterminent l'évolution de la pression et qui, partant du premier et du second signal de commande, prédéfinissent des grandeurs qui caractérisent le début de la montée en pression, le début du dosage du carburant et/ou la fin du dosage du carburant et qui, partant de l'évolution de la pression, déterminent les doses de carburant à injecter.

7. Programme d'ordinateur comportant des moyens de code de programme pour exécuter toutes les étapes selon l'une quelconque des revendications 1 à 5, lorsque le programme est exécuté par un ordinateur, notamment un appareil de commande d'un moteur à combustion interne.

8. Produit programme d'ordinateur comportant des moyens de code programme, enregistrés sur un support de données que peut lire un ordinateur pour effecteur le procédé selon l'une quelconque des revendications 1 à 5 lorsque le produit programme est exécuté sur un ordinateur, notamment dans un appareil de commande d'un moteur à combustion interne.

9. Support de mémoire numérique, notamment disquette, comportant des signaux de commande à lecture électronique avec l'enregistrement d'un programme d'ordinateur selon la revendication 7.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1022542 A1

- EP 0840003 A